(19) Europäisches Patentamt
European Patent Office
Office européen des brevets

(11) EP 2 638 079 B1

(12) **EUROPEAN PATENT SPECIFICATION**

(45) Date of publication and mention of the grant of the patent:
**07.01.2015 Bulletin 2015/02**

(21) Application number: **11779421.4**

(22) Date of filing: **08.11.2011**

(51) Int Cl.:
***C08F 10/06*** *(2006.01)* ***C08F 2/00*** *(2006.01)*
***C08F 4/646*** *(2006.01)*

(86) International application number:
**PCT/EP2011/069618**

(87) International publication number:
**WO 2012/062738 (18.05.2012 Gazette 2012/20)**

(54) **IMPROVED PROCESS FOR PRODUCING HETEROPHASIC PROPYLENE COPOLYMERS**

VERBESSERTES VERFAHREN ZUR HERSTELLUNG HETEROPHASISCHER PROPYLENCOPOLYMERE

PROCÉDÉ PERFECTIONNÉ POUR LA PRODUCTION DE COPOLYMÈRES HÉTÉROPHASIQUES DU PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2010 EP 10190999**

(43) Date of publication of application:
**18.09.2013 Bulletin 2013/38**

(73) Proprietor: **Borealis AG**
**1220 Vienna (AT)**

(72) Inventors:
- **LESKINEN, Pauli**
  **FI-00700 Helsinki (FI)**
- **GREIN, Christelle**
  **A-4020 Linz (AT)**

(74) Representative: **Lux, Berthold et al**
**Maiwald Patentanwalts GmbH**
**Elisenhof**
**Elisenstraße 3**
**80335 München (DE)**

(56) References cited:
**EP-A1- 1 935 938**
**WO-A1-2009/129873**
**WO-A1-2009/153213**
**WO-A2-2008/015113**
**WO-A2-2009/050045**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 638 079 B1

## Description

The present invention relates to an improved process for producing non-sticky, high flow heterophasic propylene copolymers, said process being characterized by an improved hydrogen and simultaneously comonomer, like ethylene, response, the heterophasic propylene copolymers showing excellent performance in terms of flowability and impact-stiffness balance.

In principle, heterophasic or block propylene copolymers have a two-phase structure, consisting of a polypropylene matrix and an elastomeric phase which is dispersively distributed. The elastomeric phase contains a propylene copolymer rubber, like ethylene propylene rubber (EPR). The rubber component is thus a copolymer of propylene and a further alpha-olefin, like ethylene and is mainly in amorphous (= xylene cold soluble, XCS) form.

There are essentially two different kinds of heterophasic propylene copolymers known in the art: a) heterophasic copolymers comprising a propylene random copolymer as matrix (RAHECO) and b) heterophasic copolymers having a propylene homopolymer as matrix phase.

Heterophasic propylene copolymers are well established in a lot of applications, such as moulding applications, like blow moulding and injection moulding, film extrusion applications, wires and cables or pipes, because of their good stiffness/impact ratio together with good flowability. For example heterophasic polymers are used for the production of car exteriors and interiors, in particular dashboards, door claddings, consoles, trims and the like as well as in the packaging area such as food packaging, medical packaging and consumer products.

Many different types of heterophasic systems have been described depending on the individual desire.

From WO 2009/129873 heterophasic propylene copolymers with high purity, which is shown in reduced volatiles content, reduced fogging and reduced hexane-solubles content, are known. These high purity heterophasic propylene copolymers are prepared with a multi-step polymerisation procedure in the presence of a special Ziegler-Natta procatalyst which contains a trans-esterification product of a lower alcohol and a phthalic ester in combination with a special external donor.

According to the examples the multi-step polymerisation procedure comprises a prepolymerisation step, a slurry phase polymerisation step in a loop reactor and a subsequent gas phase polymerisation step. As catalyst system a Ziegler-Natta procatalyst prepared according to WO 92/19653 with di(ethylhexyl)phthalate (DOP) as dialkylphthalat and ethanol as alcohol, with triethyl-aluminium (TEA) as co-catalyst and diethylaminotriethoxysilane as external donor was used.

The heterophasic copolymers obtained have a matrix $MFR_2$ (230°C, 2.16kg) in the range of 63 to 163 g/10min and an end matrix $MFR_2$ (230°C, 2.16kg) in the range of 44 to 97 g/10min. The intrinsic viscosity of the amorphous phase of these heterophasic copolymers is in the range of 1.76 to 2.27 dl/g. The xylene cold soluble (XCS) phase is present in an amount from 9.4 to 15.0 wt%

The ethylene content of the heterophasic copolymers is in the range 3.3 to 7.1 wt%

From WO 2010/049448 further heterophasic propylene copolymers are known. These high purity heterophasic propylene copolymers are prepared with a multi-step polymerisation procedure in the presence of a special Ziegler-Natta procatalyst which contains a trans-esterification product of a lower alcohol and a phthalic ester in combination with a special external donor.

According to the examples the multi-step polymerisation procedure comprises a prepolymerisation step, a slurry phase polymerisation step in a loop reactor and a subsequent gas phase polymerisation step. As catalyst system a combination of a Ziegler-Natta procatalyst prepared according to WO 92/19653 with DOP as dialkylphthalat and ethanol as alcohol, with triethyl-aluminium (TEA) as co-catalyst and dicyclopentyl dimethoxy silane or diisopropyl dimethoxy silane as external donor was used.

The heterophasic copolymers obtained have a matrix $MFR_2$ (230°C, 2.16kg) in the range of 85 to 89 g/10min and an end matrix $MFR_2$ (230°C, 2.16kg) of about 41 g/10min.

The intrinsic viscosity of the amorphous phase of these heterophasic copolymers is in the range of 2.23 to 2.34 dl/g and for compounded copolymers in the range of 3.45 to 3.5 dl/g. The xylene cold soluble (XCS) phase is present in an amount from 15.5 to 16.0 wt%

The ethylene content of the heterophasic copolymers is in the range 6.2 to 7.3 wt%.

WO 2010/040492 describes a heterophasic propylene resin having an $MFR_2$ (2.16 kg, 230°C) of more than 40 g/10 min, determined according to ISO 1133, comprising a propylene homo- or copolymer matrix (A) and an ethylene-propylene rubber phase (B) dispersed within the matrix, wherein the heterophasic propylene resin has a fraction insoluble in p-xylene at 25°C (XCU) with an intrinsic viscosity of 1.2 dl/g or less, determined according to DIN EN ISO 1628-1 and -3, the fraction insoluble in p-xylene at 25°C (XCU) being composed of propylene monomer units in an amount of at least 95 wt%, and a fraction soluble in p-xylene at 25°C (XCS), having an intrinsic viscosity of 2.0 to 3.5 dl/g, determined according to DIN EN ISO 1628-1 and -3 and being composed of propylene monomer units in an amount of 50 wt% or more, and having a glass transition temperature Tg as measured by DSC according to ISO 11357-2:1999 in the range of - 42 to - 30 °C.

The trend in product development for moulding applications is directed towards high flow materials with high stiffness and impact strength.

For the production of heterophasic copolymers with an excellent impact/stiffness at a high $MFR_2$, a high $MFR_2$, i.e. equal to or above 200 g/10min, in the matrix is necessary.

None of the above cited literatures describes a process for preparing high flow heterophasic copolymers with an $MFR_2$ of the matrix (in accordance with ISO 1133 (230°C, 2.16 kg)) equal to or above 200 g/10min which shows an improved hydrogen and simultaneously comonomer, like ethylene, response; the heterophasic propylene copolymers showing excellent performance in terms of flowability and impact-stiffness balance and being thus suitable for moulding applications, preferably for packaging applications, especially for the production of thin wall packaging grades.

It was therefore an object of the present invention to provide an improved, more efficient process which allows the production of high flow heterophasic copolymers with an $MFR_2$ of the matrix in accordance with ISO 1133 (230°C, 2.16 kg) equal to or above 200 g/10min, said high flow heterophasic copolymers being suitable especially for thin wall packaging applications.

The finding of the present invention is that the object can be solved with a multi-stage process using a Ziegler-Natta procatalyst, a cocatalyst and a special external cocatalyst.

Thus the present invention is directed to a process for producing high flow heterophasic propylene copolymers; said process comprises the steps of

- polymerising propylene and optionally an ethylene and/or $C_4$-$C_{12}$ alpha-olefin comonomer in a slurry reactor in the presence of hydrogen and a polymerisation catalyst system, obtaining as slurry reactor product a first propylene polymer fraction (PP1) of the polypropylene matrix
- transferring the slurry reactor product into a 1$^{st}$ gas phase reactor
- further polymerising propylene and optionally an ethylene and/or $C_4$-$C_{12}$ alpha-olefin comonomer in the presence of said slurry reactor product, the polymerisation catalyst system and additional hydrogen, obtaining as 1$^{st}$ gas phase reactor product a mixture of the first propylene polymer fraction (PP1) and a second propylene polymer fraction (PP2), being the polypropylene matrix of the heterophasic propylene copolymer having an $MFR_2$ in accordance with ISO 1133 (230°C, 2.16 kg) equal to or above 200 g/10min,
- transferring said 1$^{st}$ gas phase reactor product into a 2$^{nd}$ gas phase reactor
- producing a first elastomeric propylene copolymer fraction (EPR1), in the presence of said 1$^{st}$ gas phase reactor product and at least one ethylene and/or $C_4$ to $C_{12}$ $\alpha$-olefin, the comonomer/propylene ratio being in the range of 150 to 300 mol/kmol,
- transferring the 2$^{nd}$ gas phase reactor product into a 3$^{rd}$ gas phase reactor
- producing a second elastomeric propylene copolymer fraction (EPR2) in the presence of said 2$^{nd}$ gas phase reactor product and at least one ethylene and/or $C_4$ to $C_{12}$ $\alpha$-olefin, the comonomer/propylene ratio being in the range of 300 to 1000 mol/kmol and
- recovering the heterophasic propylene copolymer for further processing said polymerisation catalyst system comprises

    (i) a Ziegler-Natta procatalyst and
    (ii) an organometallic cocatalyst and
    (iii) an external donor represented by formula (I)

$$Si(OCH_2CH_3)_3(NR^1R^2) \qquad (I)$$

wherein $R^1$ and $R^2$ can be the same or different and represent a hydrocarbon group having 1 to 12 carbon atoms.

It has surprisingly been found that the process of the invention allows the production of high flow heterophasic propylene copolymers with an excellent impact/stiffness balance in a more efficient way with lower gas ratios (comonomer/propylene ratio as well as hydrogen/propylene ratio) compared to state of the art processes.

According to the invention the high flow heterophasic propylene copolymers are obtained by a four-stage polymerisation process in the presence of a catalyst system comprising as component (i) a Ziegler-Natta procatalyst, (ii) an organometallic cocatalyst and (iii) an external donor represented by formula (I) $Si(OCH_2CH_3)_3(NR^1R^2)$, wherein $R^1$ and $R^2$ can be the same or different and represent a hydrocarbon group having 1 to 12 carbon atoms.

The Ziegler-Natta procatalyst (i) used according to the present invention is typically a stereospecific, high yield Ziegler-Natta procatalyst comprising as essential component a solid transition metal component. This type of procatalysts comprise, as described in detail below, in addition to the solid transition metal (like Ti) component a cocatalyst(s) (ii) as well external donor(s) (iii) as stereoregulating agent.

The solid transition metal component preferably comprises a magnesium halide and a transition metal compound. These compounds may be supported on a particulate support, such as inorganic oxide, like silica or alumina, or, usually, the magnesium halide itself may form the solid support. Examples of such catalysts are disclosed, among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754 and WO 2004/029112.

It is also possible that solid catalysts are self supported, i.e. the catalysts are not supported on an external support, but are prepared via emulsion-solidification technology, as described for example in WO 03/000757, WO 03/000754 and WO 2004/029112.

In addition to the magnesium halide and transition metal compound the solid transition metal component usually also comprises an electron donor (internal electron donor). Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4347160, US 4382019, US 4435550, US 4465782, US 4473660, US 4530912 and US 4560671.

Preferably the Ziegler-Natta procatalyst (i) used for the present invention is a Ziegler-Natta procatalyst, which contains a trans-esterification product of a $C_1$-$C_4$-alcohol and a phthalic ester as internal donor and which is optionally modified with a vinyl compound of formula (II) $CH_2$=CH-$CHR^3R^4$, wherein $R^3$ and $R^4$ together form a 5- or 6-membered saturated, unsaturated or aromatic ring or independently represent an alkyl group comprising 1 to 4 carbon atoms.

Such a preferred procatalyst (i) used according to the invention is prepared by

a) reacting a spray crystallized or emulsion solidified adduct of $MgCl_2$ and a $C_1$-$C_4$-alcohol with $TiCl_4$
b) reacting the product of stage a) with a dialkylphthalate of formula (III)

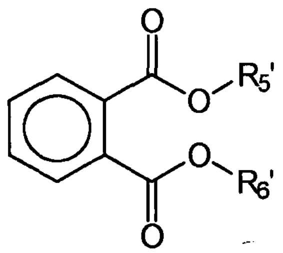

(III)

wherein $R_5$’ and $R_6$’ are independently at least a $C_5$-alkyl,
under conditions where a transesterification between said $C_1$-$C_4$-alcohol and said dialkylphthalate of formula (III) takes place to form the internal donor,
c) washing the product of stage b) and
d) optionally reacting the product of step c) with additional $TiCl_4$.

The procatalyst is produced as defined for example in the patent applications WO 87/07620, WO 92/19653, WO 92/19658 and EP 0 491 566.

First an adduct of $MgCl_2$ and a $C_1$-$C_4$-alcohol of the formula $MgCl_2$*nROH, wherein R is $C_1$-$C_4$-alkyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is $C_1$-$C_4$-alkyl, preferably ethyl and n is 1 to 6, is contacted with $TiCl_4$ to form a titanised carrier, followed by the steps of

- adding to said titanised carrier

  (i) a dialkylphthalate of formula (III) with $R_5$’ and $R_6$’ being independently at least a $C_5$-alkyl, like at least a $C_8$-alkyl, or preferably
  (ii) a dialkylphthalate of formula (III) with $R_5$’ and $R_6$’ being the same and being at least a $C_5$-alkyl, like at least a $C_8$-alkyl
  or more preferably
  (iii) a dialkylphthalate of formula (III) selected from the group consisting of propylhexylphthalate (PrHP), di(ethylhexyl)phthalate (DOP), di-iso-decylphthalate (DIDP), and ditridecylphthalate (DTDP), yet more preferably the dialkylphthalate of formula (III) is di(ethylhexyl)phthalate (DOP) or di-iso-octylphthalate, in particular diethylhexylphthalate,

  to form a first product,
- subjecting said first product to suitable transesterification conditions, i.e. to a temperature between 100 to 150 °C,

such that said is $C_1$-$C_4$-alcohol is transesterified with said ester groups of said dialkylphthalate of formula (III) to form preferably at least 80 mol%, more preferably at least 90 mol%, most preferably at least 95 mol%, of a dialkylphthalate of formula (IV)

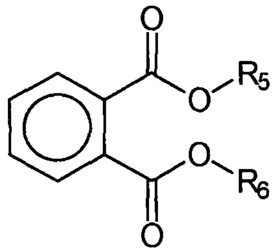

(IV)

with $R_5$ and $R_6$ being $C_1$-$C_4$-alkyl, preferably ethyl,
the dialkylphthalate of formula (IV) being the internal donor and

- recovering said transesterification product as the procatalyst composition.

The adduct of the formula $MgCl_2$*nROH, wherein R is $C_1$-$C_4$-alkyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

The transesterification is performed at a temperature above 100°C, advantageously between 130 to 150 °C.

As the catalyst residue is removed by extracting, an adduct of the titanised carrier and the internal donor is obtained, in which the group deriving from the ester alcohol has changed.

In case a sufficient amount of titanium remains on the carrier, it will act as an active element of the procatalyst.

Otherwise the titanisation is repeated after the above treatment in order to ensure a sufficient titanium concentration and thus activity.

Preferably the procatalyst used according to the invention contains 2.5% by weight of titanium at the most, preferably 2.2% by weight at the most and more preferably 2.0 % by weight at the most. Its donor content is preferably between 4 to 12% by weight and more preferably between 6 and 10 % by weight.

More preferably the procatalyst used according to the invention has been produced by using ethanol as the alcohol and di(ethylhexyl)phthalate (DOP) as dialkylphthalate of formula (III), yielding diethyl phthalate (DEP) as the internal donor compound.

Still more preferably the procatalyst used according to the invention is a catalyst prepared according to WO92/19653; especially with the use of di(ethylhexyl)phthalate as dialkylphthalate of formula (III) or alternatively a polypropylene catalyst in the series of Polytrack, commercially available from Grace.

For the production of the heterophasic propylene copolymers according to the invention the catalyst system used comprises in addition to the Ziegler-Natta procatalyst (i) an organometallic cocatalyst as component (ii).

Accordingly it is preferred to select the cocatalyst from the group consisting of trialkylaluminium, like triethylaluminium (TEA), triisobutylaluminium, tri-n-butylaluminium; dialkyl aluminium chloride, like dimethyl- or diethyl aluminium chloride; and alkyl aluminium sesquichloride. More preferably the cocatalyst is triethylaluminium or diethylaluminium chloride, most preferably triethylaluminium is used as cocatalyst.

The Ziegler-Natta procatalyst suitable for producing the heterophasic propylene copolymer according to the invention is preferably modified by prepolymerising it with a vinyl compound of the formula (II):

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the polymer composition. The polymerised vinyl compound can act as a nucleating agent.

Concerning the modification of the procatalyst reference is made to the international applications WO 99/24478, WO 99/24479, WO 99/24503 and particularly WO 00/68315.

Furthermore the catalysts system used comprises an external donor represented by formula (I)

$$Si(OCH_2CH_3)_3(NR^1R^2)$$

wherein $R^1$ and $R^2$ can be the same or different a represent a hydrocarbon group having 1 to 12 carbon atoms.

$R^1$ and $R^2$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^1$ and $R^2$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably both $R^1$ and $R^2$ are the same, yet more preferably both $R^1$ and $R^2$ are an ethyl group.

Most preferably diethylaminotriethoxysilane is used as external donor.

The external donor may be produced according to the methods disclosed in EP 1538 167.

The weight ratio of the organoaluminium compound to external donor ranges preferably between 1 and 10, more preferably between 2 and 5.

Surprisingly it has been found that by the usage of the combination of a Ziegler-Natta procatalyst, preferably containing the above described transesterification product as internal donor, an organometallic cocatalyst and a specific external donor, for the preparation of high flow heterophasic propylene copolymers, clearly less comonomer is needed as normally used.

The same is true for the amount of hydrogen needed. With the process of the invention clearly lower hydrogen/propylene ratios are needed in the slurry phase as well as in the gas phase polymerisation steps in order to achieve the desired properties of the high flow heterophasic propylene copolymers.

As a consequence the process is more efficient compared to known processes, needs less raw material, reduces the need of recovery of comonomer and/or hydrogen, thus lowers the production costs.

A further advantage is that grade changes from the heterophasic or random copolymers to homopolymers can be done faster in the propylene plants, since less ethylene is present in the process.

According to the present invention the special combination of Ziegler-Natta procatalyst, organometallic cocatalyst and specific external donor as described above is used in a four-stage polymerisation process.

The first polymerisation step of the process according to the invention is a slurry phase polymerisation step.

The second, third and fourth polymerisation step of the process according to the invention are gas phase polymerisation steps, which are performed in gas phase reactors.

A preferred sequential polymerisation process is a "loop-gas phase"-process, such as developed by Borealis (known as BORSTAR® technology) described e.g. in patent literature, such as in EP 0 887 379, WO 92/12182, WO 99/24478, WO 99/24479 or in WO 00/68315.

A further suitable slurry-gas phase process is the Spheripol® process of Basell.

With respect to the above-mentioned preferred slurry-gas phase process, the following general information can be provided with respect to the process conditions.

The polymerisation in the first polymerisation step is as mentioned above conducted in slurry, whereby the polymer particles formed in the polymerisation, together with the catalyst fragmented and dispersed within the particles, are suspended in a fluid hydrocarbon. The slurry is agitated to enable the transfer of reactants from the fluid into the particles.

Slurry polymerisation is preferably a so called bulk polymerisation. By "bulk polymerisation" is meant a process where the polymerisation is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerisation, the inert components tend to accumulate, and thus the reaction medium may comprise up to 40 wt% of other compounds than monomer. It is to be understood, however, that such a polymerisation process is still within the meaning of "bulk polymerisation", as defined above.

The temperature in the slurry polymerisation is typically from 50 to 110°C, preferably from 60 to 100°C and in particular from 65 to 95°C. The pressure is from 1 to 150bar, preferably from 10 to 100bar. In some cases it may be preferred to conduct the polymerisation at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture.

The slurry polymerisation may be conducted in any known reactor used for slurry polymerisation. Such reactors include a continuous stirred tank reactor and a loop reactor. It is especially preferred to conduct the polymerisation in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The residence time can vary in the reactor zones identified above. In one embodiment, the residence time in

the slurry reactor, for example a loop reactor, is in the range of from 0.5 to 5 hours, for example 0.5 to 2 hours, while the residence time in the gas phase reactor generally will be from 1 to 8 hours.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

Into the slurry polymerisation stage other components may also be introduced as it is known in the art. Thus, hydrogen is added to control the molecular weight of the polymer. Process additives may also be introduced into the reactor to facilitate a stable operation of the process.

Since the slurry polymerisation stage is followed by a gas phase polymerisation stage it is preferred to conduct the slurry directly into the gas phase polymerisation zone without a flash step between the stages. This kind of direct feed is described in EP-A-887379, EP-A-887380, EP-A-887381 and EP-A-991684.

The polymerisation in gas phase may be conducted in a fluidized bed reactor, in a fast fluidized bed reactor or in a settled bed reactor or in any combination of these. When a combination of reactors is used then the polymer is transferred from one polymerisation reactor to another. Furthermore, a part or whole of the polymer from a polymerisation stage may be returned into a prior polymerisation stage.

Ad fluidized bed:

In a fluidized bed gas phase reactor an olefin is polymerised in the presence of a polymerisation catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871. One or more of the above-mentioned components may be continuously added into the fluidization gas to compensate for losses caused, among other, by reaction or product withdrawal.

From the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087361. Other types of fluidization grids are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerisable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product

and the catalyst used in the polymerisation.

The catalyst may be introduced into the reactor in various ways, either continuously or intermittently. Among others, WO-A-01/05845 and EP-A-499759 disclose such methods. Where the gas phase reactor is a part of a reactor cascade the catalyst is usually dispersed within the polymer particles from the preceding polymerisation stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidized bed. An example of suitable agitator design is given in EP-A-707513.

Typically the fluidized bed polymerisation reactor is operated at a temperature within the range of from 50 to 100 °C, preferably from 65 to 90 °C. The pressure is suitably from 10 to 40 bar, preferably from 15 to 30 bar.

Ad fast fluidized bed:

The polymerisation may also be conducted in a fast fluidized bed reactor. In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles. The polymer is transferred to a subsequent reaction zone, such as a settled bed or a fluidized bed or another fast fluidized bed reactor. The gas, on the other hand, is compressed, cooled and recycled to the bottom of the fast fluidized bed reactor. In one such embodiment the polymer is transferred from the riser (operated in fast fluidized mode) into the downcomer (operated as settled bed, as explained below) and the fluidizing gas is then directed to compression and cooling as described above. The combination of fast fluidized bed and settled bed is disclosed, among others, in WO-A-97/04015, WO-A-2006/022736 and WO-A-2006/120187.

Typically the fluidized bed polymerisation reactor is operated at a temperature within the range of from 50 to 100 °C, preferably from 65 to 90 °C. The pressure is suitably from 10 to 40 bar, preferably from 15 to 30 bar.

Ad settled bed:

Polymerisation may also be conducted in a settled bed. In the settled bed the polymer flows downward in a plug flow manner in an environment containing reactive components in gaseous phase. The polymer powder is introduced into the bed from the top from where it flows downwards due to gravity.

The reactants, such as hydrogen, monomer and comonomers, may be introduced at any point of the reactor. However, where the gas flows upwards its velocity should not exceed the minimum fluidization velocity as otherwise no downward flow of powder would be obtained. It is also preferred to have a gas buffer at the top of the reactor so that reaction gas from previous polymerisation zones contained in the polymer powder would be removed to the extent possible.

The temperature of the settled bed may be controlled by adjusting the temperature and ratio of the reactant and/or inert gases introduced into the settled bed zone.

The settled bed polymerisation zone is preferably combined with a fluidized bed polymerisation zone or fast fluidized bed reaction zone. Thus, the polymer is introduced into the top of the settled bed zone from a fluidized bed zone or a fast fluidized bed zone. The polymer is withdrawn from the bottom of the settled bed polymerisation zone and recycled into the fluidized bed polymerisation zone or fast fluidized bed polymerisation zone.

Polymerisation in settled bed is disclosed, among others, in EP-A-1633466, EP-A-1484343 and WO-A-97/04015.

Typically the settled bed polymerisation reactor is operated at a temperature within the range of from 50 to 100 °C, preferably from 65 to 90 °C. The pressure is suitably from 10 to 40 bar, preferably from 15 to 30 bar.

Preferably the process comprises also a prepolymerisation step.

In a preferred embodiment, the prepolymerisation is conducted in a continuous manner as bulk slurry polymerisation in liquid propylene, i.e. the liquid phase mainly comprises propylene, with minor amount of other reactants and optionally inert components dissolved therein. Preferably the prepolymerisation is conducted in a continuous stirred tank reactor or a loop reactor.

The prepolymerisation reaction is typically conducted at a temperature of 0 to 60 °C, preferably from 10 to 50 °C, and more preferably from 20 to 45 °C.

The pressure in the prepolymerisation reactor is not critical but must be sufficiently high to maintain the reaction mixture in liquid phase. Thus, the pressure may be from 20 to 100 bar, for example 30 to 70 bar.

The prepolymerisation is carried out at an average residence time of 5 minutes up to 90 min. Preferably the average residence time is within the range of 10 to 60 minutes and more preferably within the range of 20 to 50 minutes.

The reaction conditions are well known in the art as disclosed, among others, in GB 1580635.

In the prepolymerisation step it is also possible to feed comonomers into the prepolymerisation stage. Examples of suitable comonomers are ethylene or alpha-olefins having from 4 to 10 carbon atoms. Especially suitable comonomers are ethylene, 1-butene, 1-hexene, 1-octene or their mixtures. Most preferable comonomer is ethylene.

In average, the amount of prepolymer on the catalyst is preferably from 10 to 1000 g per g of the solid catalyst component, more preferably is from 50 to 500 g per g of the solid catalyst component.

As the person skilled in the art knows, the catalyst particles recovered from a continuous stirred prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst is preferably within the limits specified above. The amount of prepolymer is known in the art, among others, from GB 1580635.

The catalyst components are preferably all introduced into the prepolymerisation step. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or the walls of the reactor as disclosed in WO-A-00/66640.

According to the present invention the first stage is a slurry phase polymerisation, preferably performed in a loop reactor.

In this first step propylene and optionally an ethylene and/or $C_4$-$C_{12}$ alpha-olefin comonomer are polymerised.

Suitable $C_4$-$C_{12}$ alpha-olefin comonomers, preferably $C_4$-$C_{10}$ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

Thus, as slurry reactor product a first propylene polymer fraction (PP1) of the polypropylene matrix is obtained, which can be a propylene homopolymer or a propylene random copolymer.

Preferably a propylene homopolymer is produced in the first polymerisation step.

Furthermore hydrogen is added to the slurry phase reactor, preferably loop reactor. Preferably the hydrogen/propylene ($H_2/C_3$) ratio used is in the range of 15 to 35 mol/kmol and preferably 20 to 30 mol/kmol.

The $MFR_2$ measured in accordance with ISO 1133 (230°C, 2.16kg) of the slurry phase polymerisation product is in the range of 100 to 1000 g/10min, preferably 200 to 700 g/10min and more preferably 240 to 500 g/10min.

The slurry phase polymerisation product, being a first propylene polymer fraction (PP1), is then transferred to the first gas phase reactor.

In the first gas phase reactor further propylene and optionally further ethylene and/or $C_4$-$C_{12}$ alpha-olefin comonomer are polymerised in the presence of the slurry phase polymerisation product.

The comonomer used in the first gas phase reactor may be different from that used in the slurry phase polymerisation, but is preferably the same.

Again suitable $C_4$-$C_{12}$ alpha-olefin comonomers, preferably $C_4$-$C_{10}$ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

Thus, as first gas phase reactor product a mixture of the first propylene polymer fraction (PP1) and a second propylene polymer fraction (PP2), being the polypropylene matrix of the heterophasic propylene copolymer is obtained, which can be a propylene homopolymer or a propylene random copolymer.

Preferably the matrix is a propylene homopolymer.

In addition hydrogen is added to the first gas phase polymerisation in a hydrogen/propylene ratio in the range of 50 to 300 mol/kmol and preferably 100 to 200 mol/kmol.

The matrix, preferably being a propylene homopolymer, according to the invention has an $MFR_2$ measured in accordance with ISO 1133 (230°C, 2.16kg) equal to or above 200 g/10min, preferably in the range of 200 to 500 g/10min and more preferably in the range of 200 to 400 g/10min.

The expression homopolymer used in the instant invention relates to a polypropylene that consists substantially, i.e. of at least 97 wt%, preferably of at least 98 wt%, more preferably of at least 99 wt%, still more preferably of at least 99.8 wt% of propylene units. In a preferred embodiment only propylene units in the propylene homopolymer are detectable. The comonomer content can be determined with FT infrared spectroscopy.

Where the propylene matrix comprises a propylene copolymer, the propylene copolymer comprises monomers copolymerisable with propylene, for example comonomers such as ethylene and $C_4$ to $C_{20}$ alpha-olefins, in particular ethylene and $C_4$ to $C_{10}$ alpha-olefins, e.g. 1-butene or 1-hexene. The comonomer content in the propylene matrix is in such a case preferably relatively low, i.e. up to 4.0 wt%, more preferably 0.5 to 3.5 wt%, still more preferably 0.5 to 2.5 wt%, yet more preferably 0.5 to 2.0 wt%.

The propylene matrix can be unimodal or multimodal, like bimodal. However it is preferred that the propylene matrix is unimodal. Concerning the definition of unimodal and multimodal, like bimodal, it is referred to the definition below.

The first gas phase polymerisation product, being the matrix of the heterophasic propylene copolymers, is then transferred to the second gas phase reactor.

In the second gas phase reactor a first elastomeric propylene copolymer fraction (EPR1) is produced in the presence of said 1$^{st}$ gas phase reactor product, i.e. the matrix, and at least one ethylene and/or $C_4$ to $C_{12}$ $\alpha$-olefin comonomer.

Suitable $C_4$-$C_{12}$ alpha-olefin comonomers, preferably $C_4$-$C_{10}$ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

According to the invention propylene and the comonomer are fed to the second gas phase reactor in a comonomer/propylene, preferably ethylene/propylene ($C_2/C_3$), ratio in the range of 150 to 300 mol/kmol and preferably 200 to 250 mol/kmol.

In addition hydrogen is added to the second gas phase polymerisation in a hydrogen/propylene ratio in the range of 5 to 300 mol/kmol and preferably 20 to 100 mol/kmol, respectively in a hydrogen/comonomer (preferably ethylene) ratio in the range of 50 to 200 mol/kmol and preferably in the range of 70 to 150 mol/kmol.

According to the invention the comonomer/propylene ratio in the second gas phase reactor is kept on a low level in order to produce a relatively propylene-rich elastomeric propylene copolymer fraction (EPR1) with a relatively low intrinsic viscosity measured according to ISO 1628-1 (at 135°C in tetraline).

The rubber component is thus a copolymer of propylene and a further alpha-olefin, like ethylene and is mainly in amorphous (= xylene cold soluble, XCS) form.

Preferably the XCS fraction of the second gas phase reactor product is present in an amount of 5 to 25 wt% and more preferably in an amount of 10 to 20 wt%.

Furthermore the amorphous phase of the XCS fraction of the second gas phase reactor product has an intrinsic viscosity measured according to ISO 1628-1 (at 135°C in tetraline) in the range of 1.0 to 3.5 dl/g, preferably in the range of 1.5 dl/g up to 2.5 dl/g, preferably in the range of 1.8 to 2.1 dl/g.

The comonomer content of the amorphous phase of the XCS fraction of the second gas phase reactor product is preferably in the range of 20 to 40 wt%, more preferably in the range of 23 to 35 wt%.

The propylene content of the amorphous phase of the XCS fraction of the second gas phase reactor product thus being in the range of 65 to 80 wt%, more preferably 68 to 77 wt%.

The second gas phase polymerisation product is then transferred to the third gas phase reactor.

In the third gas phase reactor a second elastomeric propylene copolymer fraction (EPR2) is produced in the presence of said 2$^{nd}$ gas phase reactor product, and at least one ethylene and/or $C_4$ to $C_{12}$ $\alpha$-olefin.

Suitable $C_4$-$C_{12}$ alpha-olefin comonomers, preferably $C_4$-$C_{10}$ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

The comonomer used in the third gas phase reactor may be different from that used in the second gas phase reactor, but is preferably the same.

According to the invention propylene and the comonomer are fed to the third gas phase reactor in a comonomer/propylene, preferably ethylene/propylene ($C_2/C_3$), ratio in the range of 300 to 1000 mol/kmol and preferably 500 to 800 mol/kmol.

In addition hydrogen is added to the third gas phase polymerisation in a hydrogen/comonomer ratio in the range of 10 to 50 mol/kmol and preferably 15 to 45 mol/kmol.

According to the invention the comonomer/propylene ratio in the third gas phase reactor is increased in order to reach the desired end-comonomer content of the amorphous phase.

The amount of hydrogen added to the third gas phase reactor is reduced in order to reach the desired end intrinsic viscosity measured according to ISO 1628-1 (at 135°C in tetraline).

Preferably the XCS fraction of the heterophasic propylene copolymer is present in an amount of 10 to 35 wt% and more preferably in an amount of 15 to 30 wt%.

Furthermore the amorphous phase of the XCS fraction of the heterophasic propylene copolymer has an intrinsic viscosity measured according to ISO 1628-1 (at 135°C in tetraline) in the range of 1.0 to 4.0 dl/g, preferably in the range of 2.0 dl/g up to 3.5 dl/g, more preferably in the range of 2.5 to 3.2 dl/g.

The comonomer content of the amorphous phase of the XCS fraction of the heterophasic propylene copolymer is preferably in the range of 30 to 50 wt%, more preferably in the range of 35 to 45 wt%.

The propylene content of the amorphous phase of the XCS fraction of the heterophasic propylene copolymer thus being in the range of 50 to 70 wt%, more preferably 55 to 65 wt%.

The elastomeric copolymer comprises 2 comonomer/propylene copolymer fractions, which can be the same or which can differ from each other in view of the molecular weight distribution (MWD) and/or the comonomer content.

The expression "multimodal" or "bimodal" used herein refers to the modality of the polymer, i.e.

- the form of its molecular weight distribution curve, which is the graph of the molecular weight fraction as a function of its molecular weight,

  and / or
- the form of its comonomer content distribution curve, which is the graph of the comonomer content as a function of the molecular weight of the polymer fractions.

When the distribution curves (molecular weight or comonomer content) from these fractions are superimposed to obtain the molecular weight distribution curve or the comonomer content distribution curve of the final elastomeric copolymer, these curves may show two, three or more maxima or at least be distinctly broadened when compared with curves for the individual fractions. Such a polymer, produced in two, three or more sequential steps, is called bimodal, trimodal or multimodal, depending on the number of steps.

Preferably the elastomeric copolymer produced according to the present invention is bimodal.

The final high flow heterophasic propylene copolymer has a $MFR_2$ in the range of 20 to 150 g/10min, preferably 35 to 100 g/10min.

The total amount of comonomer present in the heterophasic propylene copolymer is in the range of 5 to 20 wt%, preferably 8 to 12 wt%.

The heterophasic propylene copolymer of the present invention as defined above may contain up to 2.0 wt% of additives commonly employed in the polyolefin field, like antioxidants, light stabilizers, nucleating agents, slip agents, colorants and fillers.

The additives, as defined above, are added to the heterophasic propylene copolymer, which is collected from the final reactor of the series of reactors. Preferably, these additives are mixed into the composition prior to or during the extrusion process in a one-step compounding process. Alternatively, a master batch may be formulated, wherein the heterophasic propylene copolymer is first mixed with only some of the additives.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive heterophasic propylene copolymers.

Heterophasic propylene copolymers according to the invention may be pelletized and compounded using any of the variety of compounding and blending methods well known and commonly used in the resin compounding art.

Additionally it is preferred that the heterophasic propylene copolymer of the present invention has an excellent performance in terms of flowability and impact-stiffness balance.

Thus it is preferred that the impact strength measured according to Charpy impact test according to ISO 179 (1eA) at 23°C is at least 6 $kJ/m^2$, more preferably of at least 7 $kJ/m^2$. The impact strength according to Charpy impact test according to ISO 179 (1eA) at -20°C is preferably at least 2 $kJ/m^2$, more preferably at least 4 $kJ/m^2$.

The tensile modulus according to ISO 527-2 measured on injection moulded specimens of type F3/4 prepared in accordance with EN ISO 1873-2, is preferably in a range of 900 to 1500 MPa, more preferably in the range of 1000 to 1400 MPa.

The heterophasic propylene copolymer of the present invention is furthermore featured by excellent process properties, i.e. the copolymer is non-sticky and causes no reactor fouling.

The main applications of the heterophasic propylene copolymer of the invention are moulding applications, like blow moulding and injection moulding, preferably in the packaging area such as food packaging, medical packaging and consumer products, more preferably in thin wall packaging.

## Examples:

### 1. Methods

#### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

#### Comonomer content

The comonomer contents of the copolymer was determined by quantitative Fourier transform infrared spectroscopy (FTIR) calibrated to results obtained from quantitative $^{13}C$ NMR spectroscopy.

When measuring the ethylene content in polypropylene, a thin film of the sample (thickness about 250 mm) was prepared by hot-pressing. The area of $-CH_2-$ absorption peak (800-650 $cm^{-1}$) was measured with Perkin Elmer FTIR 1600 spectrometer.

The comonomer content C was determined using a film thickness method using the intensity of the quantitative band I(q) and the thickness of the pressed film T using the following relationship: [ I(q) / T ]m + c = C where m and c are the coefficients determined from the calibration curve constructed using the comonomer contents obtained from $^{13}C$ NMR spectroscopy.

#### Xylene cold soluble fraction (XCS wt%)

The xylene cold soluble fraction (XCS) is determined at 23 °C according to ISO 6427.

**The amorphous content (AM)** is measured by separating the above xylene cold soluble fraction (XCS) and precipitating the amorphous part with acetone. The precipitate was filtered and dried in a vacuum oven at 90 °C.

$$AM\% = \frac{100\ x\ m1\ x\ v0}{m0\ x\ v1}$$

wherein

"AM%" is the amorphous fraction,
"m0" is initial polymer amount (g)
"m1" is weight of precipitate (g)
"v0" is initial volume (ml)
"v1" is volume of analyzed sample (ml)

#### Intrinsic Viscosity

The intrinsic viscosity (IV) value increases with the molecular weight of a polymer. The intrinsic viscosity of the XCU and the XCS fraction is measured in tetraline at 135°C according to DIN EN ISO 1628-1 and -3.

#### Charpy Notched Impact Strength

Charpy impact strength was determined according to ISO 179-1eA:2000 on V-notched samples of 80x10x4 $mm^3$ at 23 °C (Charpy impact strength (23°C)), 0°C (Charpy impact strength (0°C)) and -20 °C (Charpy impact strength

(-20°C)). When not otherwise stated a standard impact velocity of 2.9 m/s was used.

The test specimens were prepared by injection moulding using an IM V 60 TECH machinery in line with ISO 1872-2. The melt temperature was 200 °C and the mould temperature was 40 °C.

### Tensile Modulus

Tensile strength properties were determined according to ISO 527-2. on injection moulded specimens of type F3/4 prepared in accordance with EN ISO 1873-2. The tensile modulus (in MPa) was determined at 23 °C temperature with an elongation rate of 1 mm/min.

## 2. Examples

All polymers were produced in a Borstar pilot plant with a prepolymerisation reactor, one slurry loop reactor and three gas phase reactors. The catalyst used in the polymerisation process was a catalyst 1.9 wt% Ti-Ziegler-Natta-catalyst prepared according to WO 92/19653 with DOP as dialkylphthalat of the formula (III) and ethanol as alcohol with triethyl-aluminium (TEA) as co-catalyst and diethylaminotriethoxysilane as donor (IE1-4) in the ratios indicated in table 1. For the comparative examples (CE1-3) dicyclopentyldimethoxysilane was used as external donor.

Before the polymerisation, the catalyst was prepolymerised with vinylcyclohexane in an amount to achieve a concentration of 200 ppm poly(vinylcyclohexane) (PVCH) in the final polymer. The respective process is described in EP 1 028 984 and EP 1 183 307.

**Table 1:** Preparation of the heterophasic propylene copolymers

| Parameter | unit | IE 1 | IE 2 | IE3 | IE4 | CE1 | CE2 | CE3 |
|---|---|---|---|---|---|---|---|---|
| **Prepolymerisation** | | | | | | | | |
| temperature | [°C] | 30 | 30 | 30 | 30 | 30 | 30 | 30 |
| pressure | [kPa] | 5400 | 5400 | 5440 | 5430 | 5400 | 5450 | 5440 |
| Al/donor ratio | [mol/mol] | 10.1 | 10.1 | 10.2 | 10.1 | 21 | 42 | 42 |
| residence time | [h] | 0.31 | 0.31 | 0.31 | 0.31 | 0.31 | 0.31 | 0.31 |
| **Loop** | | | | | | | | |
| temperature | [°C] | 75 | 75 | 75 | 75 | 75 | 75 | 75 |
| pressure | [kPa] | 5640 | 5640 | 5670 | 5680 | 5680 | 5670 | 5670 |
| residence time | [h] | 0.28 | 0.32 | 0.30 | 0.31 | 0.30 | 0.31 | 0.31 |
| H2/C3 ratio | [mol/kmol] | 25.5 | 25.3 | 29.5 | 28.7 | 27.0 | 33.0 | 35.0 |
| MFR2 | [g/10 min] | 246 | 263 | 433 | 412 | 224 | 320 | 350 |
| XCS | [wt%] | 2.9 | 2.8 | 2.4 | 2.6 | 1.6 | 1.7 | 1.8 |
| **GPR 1** | | | | | | | | |
| temperature | [°C] | 90 | 90 | 90 | 90 | 90 | 90 | 90 |
| pressure | [kPa] | 2500 | 2500 | 2500 | 2500 | 2500 | 2500 | 2500 |
| residence time | [h] | 1.7 | 1.6 | 1.6 | 1.7 | 1.6 | 1.6 | 1.7 |
| H2/C3 ratio | [mol/kmol] | 112 | 111 | 134 | 127 | 179 | 213 | 213 |
| XCS | [wt%] | 2.6 | 2.5 | 2.6 | 2.4 | 1.8 | 1.5 | 1.7 |
| MFR2 | [g/10 min] | 235 | 248 | 340 | 350 | 180 | 302 | 310 |
| **GPR 2** | | | | | | | | |
| temperature | [°C] | 80 | 80 | 80 | 80 | 80 | 80 | 80 |
| pressure | [kPa] | 3200 | 3200 | 3200 | 3200 | 3200 | 3200 | 3200 |
| residence time | [h] | 2.2 | 2.2 | 1.9 | 1.9 | 1.9 | 1.9 | 1.9 |

(continued)

| GPR 2 | | | | | | | | |
|---|---|---|---|---|---|---|---|---|
| H2/C2 ratio | [mol/kmol] | 92 | 89 | 122 | 120 | 202 | 447 | 441 |
| C2/C3 ratio | [mol/kmol] | 212 | 215 | 222 | 218 | 309 | 303 | 303 |
| XCS | [wt%] | 17.7 | 13.2 | 15.2 | 12.9 | 16.1 | 13.5 | 14.0 |
| AM | [wt%] | 15.5 | 10.8 | 13.2 | 10.4 | 14.6 | 12.0 | 13.0 |
| IV of AM | [dl/g] | 2.0 | 2.1 | 1.9 | 2.0 | 1.8 | 1.4 | 1.4 |
| C2 of AM | [wt%] | 30.0 | 28.3 | 30.3 | 27.5 | 23.1 | 22.8 | 22.2 |
| C2 content | [wt%] | 5.8 | 4.7 | 4.5 | 3.9 | 4.3 | 3.9 | 4.0 |
| **GPR 3** | | | | | | | | |
| temperature | [°C] | 80 | 80 | 80 | 80 | 80 | 80 | 80 |
| pressure | [kPa] | 2600 | 2600 | 2540 | 2530 | 2540 | 2530 | 2530 |
| residence time | [h] | 0.7 | 0.6 | 0.6 | 0.6 | 0.6 | 0.6 | 0.6 |
| H2/C2 ratio | [mol/kmol] | 19 | 19 | 42 | 38 | 22 | 164 | 160 |
| C2/C3 ratio | [mol/kmol] | 746 | 755 | 744 | 769 | 861 | 881 | 885 |
| XCS | [wt%] | 26.9 | 23.2 | 20.8 | 18.1 | 21.5 | 19.1 | 20.5 |
| AM | [wt%] | 25.2 | 21.2 | 19.1 | 16.0 | 21.0 | 18.0 | 17.0 |
| IV of AM | [dl/g] | 3.19 | 3.06 | 2.68 | 2.57 | 3.3 | 1.8 | 1.8 |
| C2 of AM | [wt%] | 40.6 | 37.2 | 37.6 | 39.7 | 38.0 | 36.5 | 39.0 |
| C2 content | [wt%] | 11.9 | 10.3 | 9.6 | 9.0 | 9.6 | 9.5 | 10.4 |

The products from the 3rd gas phase reactor were mixed with a conventional additive package comprising 0.2 wt/% Irganox B225 (antioxidant masterbatch supplied by Ciba Specialty Chemicals, Switzerland) and 0.05 wt% Ca-Stearate (CAS-No. 1592-23-0). The compositions were homogenized and pelletized in a co-rotating a twin screw extruder (PRISM TSE24 L/D ratio 40) with different mixing segments at temperatures between 190 and 240°C at a throughput of 10 kg/h and a screw speed of 50 rpm. The material was extruded to two circular dies of 3 mm diameter into a water bath for strand solidification and then pelletized and dried.

**Table 2:** Properties of the final product

| Parameter | unit | IE1 | IE2 | IE3 | IE4 | CE1 | CE2 | CE3 |
|---|---|---|---|---|---|---|---|---|
| PP Mixer $MFR_2$ | [g/10min] | 41 | 52 | 90 | 92 | 43 | 88 | 102 |
| PP Mixer XCS | [wt%] | 26.4 | 22.9 | 19.7 | 19.1 | 22.3 | 20.0 | 19.5 |
| PP Mixer AM | [wt%] | 24.0 | 21.3 | 17.7 | 17.0 | 20.9 | 18.2 | 18.0 |
| PP Mixer C2 of AM | [wt%] | 32.8 | 36.8 | 28.6 | 28.8 | 31.3 | 29.5 | 30.1 |
| PP Mixer IV of AM | [dl/g] | 3.1 | 3.1 | 2.6 | 2.6 | 3.3 | 1.7 | 2.0 |
| PP Mixer C2 total | [wt%] | 12.0 | 10.6 | 9.3 | 9.2 | 10.2 | 9.4 | 9.0 |
| PP Pellet $MFR_2$ | [g/10min] | 40 | 50 | 92 | 94 | 45 | 83 | 105 |
| Tensil Modulus | MPa | 1100 | 1170 | 1310 | 1360 | 1250 | 1350 | 1380 |
| Charpy +23° | $kJ/m^2$ | 12.4 | 9.6 | 7.5 | 6.8 | 11.1 | 5.4 | 5.1 |
| Charpy -20°C | $kJ/m^2$ | 6.3 | 6.0 | 2.4 | 4.1 | 6.4 | 3.7 | 3.3 |

As can be seen from Table 1 the process according to the invention (IE1-IE4) needs clearly lower H2/C3 (respectively H2/C2) and C2/C3 ratios in loop as well as in the gas phase reactors compared to the comparative example

(CE1-CE3) in order to achieve comparable properties (C2 content, MFR2) of the produced heterophasic propylene copolymer.

In Figure 1 it is shown that with same gas ratio, remarkably higher C2 of AM is reached, if diethylaminotriethoxysilane is used as external donor instead of dicyclopentyldimethoxysilane.

The produced heterophasic propylene copolymers furthermore show an excellent performance in terms of flowability and impact-stiffness balance as can be seen from Table 2.

## Claims

1. Process for producing high flow heterophasic propylene copolymers; said process comprises the steps of

   - polymerising propylene and optionally an ethylene and/or $C_4$-$C_{12}$ alpha-olefin comonomer in a slurry reactor in the presence of hydrogen and a polymerisation catalyst system, obtaining as slurry reactor product first propylene polymer fraction (PP1) of the polypropylene matrix
   - transferring the slurry reactor product into a 1$^{st}$ gas phase reactor
   - further polymerising propylene and optionally an ethylene and/or $C_4$-$C_{12}$ alpha-olefin comonomer in the presence of said slurry reactor product, the polymerisation catalyst system and additional hydrogen, obtaining as 1$^{st}$ gas phase reactor product a mixture of the first propylene polymer fraction (PP1) and a second propylene polymer fraction (PP2), being the polypropylene matrix of the heterophasic propylene copolymer having an $MFR_2$ in accordance with ISO 1133 (230°C, 2.16 kg) equal to or above 200 g/10min,
   - transferring said 1$^{st}$ gas phase reactor product into a 2$^{nd}$ gas phase reactor
   - producing a first elastomeric propylene copolymer fraction (EPR1), in the presence of said 1$^{st}$ gas phase reactor product and at least one ethylene and/or $C_4$ to $C_{12}$ $\alpha$-olefin, the comonomer/propylene ratio being in the range of 150 to 300 mol/kmol
   - transferring the 2$^{nd}$ gas phase reactor product into a 3$^{rd}$ gas phase reactor
   - producing a second elastomeric propylene copolymer fraction (EPR2) in the presence of said 2$^{nd}$ gas phase reactor product and at least one ethylene and/or $C_4$ to $C_{12}$ $\alpha$-olefin, the comonomer/propylene ratio being in the range of 300 to 1000 mol/kmol and
   - recovering the heterophasic propylene copolymer for further processing said polymerisation catalyst system comprising

     (i) a Ziegler-Natta procatalyst and
     (ii) an organometallic cocatalyst and
     (iii) an external donor represented by formula (I)

     $$Si(OCH_2CH_3)_3(NR^1R^2) \qquad (I)$$

     wherein $R^1$ and $R^2$ can be the same or different and represent a hydrocarbon group having 1 to 12 carbon atoms.

2. Process according to claim 1, wherein the matrix of the heterophasic propylene copolymers is a propylene homopolymer.

3. Process according to claim 1, wherein the procatalyst (i) used is a Ziegler-Natta procatalyst, which contains a trans-esterification product of a $C_1$-$C_4$-alcohol and a phthalic ester as internal donor and which is optionally modified with a vinyl compound of formula (II) $CH_2$=CH-$CHR^3R^4$, wherein $R^3$ and $R^4$ together form a 5- or 6-membered saturated, unsaturated or aromatic ring or independently represent an alkyl group comprising 1 to 4 carbon atoms.

4. Process according to claim 3, wherein the procatalyst (i) used has been prepared by

   a) reacting a spray crystallized or emulsion solidified adduct of $MgCl_2$ and a $C_1$-$C_4$-alcohol with $TiCl_4$
   b) reacting the product of stage a) with a dialkylphthalate of formula (III)

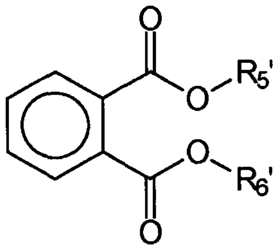

(III)

wherein $R_5$' and $R_6$' are independently at least a $C_5$-alkyl
under conditions where a transesterification between said $C_1$-$C_4$-alcohol and said dialkylphthalate of formula (III) takes place to form the internal donor
c) washing the product of stage b) and
d) optionally reacting the product of step c) with $TiCl_4$.

5. Process according to claim 4, **characterized in that** the dialkylphthalate of formula (III) is di(ethylhexyl)phthalate and that the $C_1$-$C_4$-alcohol is ethanol.

6. Process according to anyone of the preceding claims 1 to 5 wherein the Ziegler-Natta procatalyst (i) is used in the presence of an organometallic cocatalyst (ii) select from the group consisting of trialkylaluminium, dialkyl aluminium chloride and alkyl aluminium sesquichloride.

7. Process according to claim 6, **characterized in that** the cocatalyst is triethylaluminium or diethylaluminium chloride.

8. Process according to anyone of the preceding claims 1 to 7, wherein the Ziegler-Natta procatalyst is used in the presence of diethylaminotriethoxysilane as external donor.

9. Process according to claim 3, wherein the vinyl compound of formula (II) suitable for modifying the procatalyst is selected from vinyl cyclohexene, vinyl cyclopentane, vinyl-2-methyl cyclohexene and vinyl norbornane, 3-methyl-1-butene, styrene, p-methyl-styrene, 3-ethyl-1-hexene or mixtures thereof.

10. Process according to anyone of the preceding claims 1 to 9, wherein the process comprises also a prepolymerisation step.

11. Process according to anyone of the preceding claims 1 to 10, wherein the comonomer used in the second and the third gas phase reactor can be the same or different and is selected from the group of ethylene, 1-butene, 1-pentene, 1-hexene, 4-methyl-1-pentene, 1-heptene, 1-octene, 1-nonene and 1-decene or mixtures therefrom.

12. Process according to claim 11 wherein ethylene is used as the sole comonomer.

13. Process according to anyone of the preceding claims 1 to 12, wherein

- hydrogen is added to the slurry phase reactor with a hydrogen/propylene ratio in the range of 15 to 35 mol/kmol, preferably 20 to 30 mol/kmol,
- further hydrogen is added to the first gas phase reactor with a hydrogen/propylene ratio in the range of 50 to 300 mol/kmol, preferably 100 to 200 mol/kmol,
- further hydrogen is added to the second gas phase reactor with a hydrogen/propylene ratio in the range of 5 to 300 mol/kmol, preferably 20 to 100 mol/kmol, respectively respectively in a hydrogen/comonomer ratio in the range of 50 to 200 mol/kmol and preferably in the range of 70 to 150 mol/kmol and
- further hydrogen is added to the third gas phase reactor with a hydrogen/comonomer ratio in the range of 10 to 50 mol/kmol, preferably 15 to 45 mol/kmol.

14. Process according to anyone of the preceding claims 1 to 13, wherein the comonomer/propylene ratio in the second gas phase reactor being in the range of 200 to 250 mol/kmol and the comonomer/propylene ratio in the third gas phase reactor being in the range of 500 to 800 mol/kmol.

15. Process according to anyone of the preceding claims 1 to 14, wherein the matrix has an $MFR_2$ in accordance with

ISO 1133 (230°C, 2.16 kg) in the range of 200 to 500 g/10min.

## Patentansprüche

**1.** Verfahren zur Herstellung von hochfließfähigen heterophasischen Propylen-Copolymeren, wobei das Verfahren die folgenden Schritte umfasst:

- Polymerisieren von Propylen und gegebenenfalls eines Ethylen- und/oder $C_4$-$C_{12}$-Alpha-Olefin-Comonomers in einem Slurry-Reaktor in der Gegenwart von Wasserstoff und einem Polymerisations-Katalysatorsystem, wobei als Slurry-Reaktorprodukt eine erste Propylen-Polymerfraktion (PP1) der Polypropylenmatrix erhalten wird,
- Übertragen des Slurry-Reaktorprodukts in einen ersten Gasphasen-Reaktor,
- weiteres Polymerisieren von Propylen und gegebenenfalls eines Ethylen- und/oder $C_4$-$C_{12}$-Alpha-Olefin-Comonomers in der Gegenwart des Slurry-Reaktorprodukts, des Polymerisations-Katalysatorsystems und zusätzlichem Wasserstoff, wobei als Produkt des ersten Gasphasen-Reaktors eine Mischung der ersten Propylen-Polymerfraktion (PP1) und einer zweiten Propylen-Polymerfraktion (PP2) erhalten wird, welche die Polypropylenmatrix des heterophasischen Propylen-Copolymers mit einem $MFR_2$ gemäß ISO 1133 (230 °C, 2,16 kg) gleich oder größer als 200 g/10 min ist,
- Übertragen des Produkts des ersten Gasphasen-Reaktors in einen zweiten Gasphasen-Reaktor,
- Herstellen einer ersten elastomeren Propylen-Copolymerfraktion (EPR1) in der Gegenwart des Produkts des ersten Gasphasen-Reaktors und wenigstens eines Ethylens und/oder $C_4$-$C_{12}$-$\alpha$-Olefins, wobei das Comonomer/Propylen-Verhältnis im Bereich von 150 bis 300 mol/kmol liegt,
- Übertragen des Produkts des zweiten Gasphasen-Reaktors in einen dritten Gasphasen-Reaktor,
- Herstellen einer zweiten elastomeren Propylen-Copolymerfraktion (EPR2) in der Gegenwart des Produkts des zweiten Gasphasen-Reaktors und wenigstens eines Ethylens und/oder $C_4$-$C_{12}$-$\alpha$-Olefins, wobei das Comonomer/Propylen-Verhältnis im Bereich von 300 bis 1000 mol/kmol liegt, und
- Gewinnen des heterophasischen Propylen-Copolymers zur weiteren Verarbeitung,

wobei das Polymerisations-Katalysatorsystem umfasst:

(i) einen Ziegler-Natta-Prokatalysator und
(ii) einen organometallischen Cokatalysator und
(iii) einen externen Donor, der durch Formel (I) repräsentiert wird,

$$Si(OCH_2CH_3)_3(NR^1R^2) \qquad (I)$$

wobei $R^1$ und $R^2$ gleich oder unterschiedlich sein können und eine Kohlenwasserstoffgruppe mit 1 bis 12 Kohlenstoffatomen repräsentieren.

**2.** Verfahren nach Anspruch 1, bei dem die Matrix des heterophasischen Propylen-Copolymers ein Propylen-Homopolymer ist.

**3.** Verfahren nach Anspruch 1, wobei der verwendete Prokatalysator (i) ein Ziegler-Natta-Prokatalysator ist, der ein Umesterungs-Produkt eines $C_1$-$C_4$-Alkohols und eines Phthalsäureesters als internen Donor enthält und der gegebenenfalls mit einer Vinylverbindung der Formel (II) $CH_2$=CH-CH$R^3R^4$ modifiziert ist, wobei $R^3$ und $R^4$ zusammen einen 5- oder 6-gliedrigen gesättigten, ungesättigten oder aromatischen Ring bilden oder unabhängig eine Alkylgruppe repräsentieren, die 1 bis 4 Kohlenstoffatome umfasst.

**4.** Verfahren nach Anspruch 3, bei dem der verwendete Prokatalysator (i) hergestellt wurde durch:

(a) Reagieren eines spraykristallisierten oder emulsionsverfestigten Addukts von $MgCl_2$ und einem $C_1$-$C_4$-Alkohol mit $TiCl_4$,
(b) Reagieren des Produkts aus Schritt a) mit einem Dialkylphthalat der Formel (III),

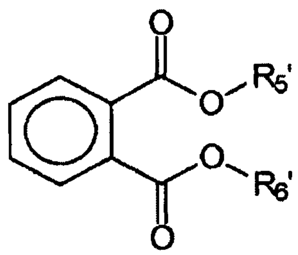

(III)

wobei $R_5$' und $R_6$' unabhängig wenigstens ein $C_5$-Alkyl sind, unter Bedingungen, bei denen eine Umesterung zwischen dem $C_1$-$C_4$-Alkohol und dem Dialkylphthalat der Formel (III) stattfindet, um den internen Donor zu bilden,

(c) Waschen des Produkts aus Stufe b) und

(d) gegebenenfalls Reagieren des Produkts aus Schritt c) mit $TiCl_4$.

**5.** Verfahren nach Anspruch 4, **dadurch gekennzeichnet, dass** das Dialkylphthalat der Formel (III) Di(ethylhexyl)phthalat ist und der $C_1$-$C_4$-Alkohol Ethanol ist.

**6.** Verfahren nach einem der vorherigen Ansprüche 1 bis 5, bei dem der Ziegler-Natta-Prokatalysator (i) in der Gegenwart eines organometallischen Cokatalysators (ii) verwendet wird, der aus der Gruppe ausgewählt ist, die aus Trialkylaluminium, Dialkylaluminiumchlorid und Alkylaluminiumsesquichlorid besteht.

**7.** Verfahren nach Anspruch 6, **dadurch gekennzeichnet, dass** der Cokatalysator Triethylaluminium oder Diethylaluminiumchlorid ist.

**8.** Verfahren nach einem der vorherigen Ansprüche 1 bis 7, bei dem der Ziegler-Natta-Prokatalysator in der Gegenwart von Diethylaminotriethoxysilan als externem Donor verwendet wird.

**9.** Verfahren nach Anspruch 3, bei dem die zum Modifizieren des Prokatalysators geeignete Vinylverbindung der Formel (II) aus Vinylcyclohexen, Vinylcyclopentan, Vinyl-2-methylcyclohexen und Vinylnorbornan, 3-Methyl-1-buten, Styrol, p-Methylstyrol, 3-Ethyl-1-hexen oder Mischungen daraus ausgewählt ist.

**10.** Verfahren nach einem der vorherigen Ansprüche 1 bis 9, wobei das Verfahren zudem einen Präpolymerisations-Schritt umfasst.

**11.** Verfahren nach einem der vorherigen Ansprüche 1 bis 10, bei dem das im zweiten und dritten Gasphasen-Reaktor verwendete Comonomer gleich oder unterschiedlich sein kann und aus der Gruppe aus Ethylen, 1-Buten, 1-Penten, 1-Hexen, 4-Methyl-1-penten, 1-Hepten, 1-Octen, 1-Nonen und 1-Decen oder Mischungen daraus ausgewählt ist.

**12.** Verfahren nach Anspruch 11, bei dem Ethylen als alleiniges Comonomer verwendet wird.

**13.** Verfahren nach einem der vorherigen Ansprüche 1 bis 12, bei dem

- dem Slurryphasen-Reaktor Wasserstoff mit einem Wasserstoff/Propylen-Verhältnis im Bereich von 15 bis 35 mol/kmol, vorzugsweise 20 bis 30 mol/kmol, zugegeben wird,
- dem ersten Gasphasen-Reaktor weiterer Wasserstoff mit einem Wasserstoff/Propylen-Verhältnis im Bereich von 50 bis 300 mol/kmol, vorzugsweise von 100 bis 200 mol/kmol, zugegeben wird,
- dem zweiten Gasphasen-Reaktor weiterer Wasserstoff mit einem Wasserstoff/Propylen-Verhältnis im Bereich von 5 bis 300 mol/kmol, vorzugsweise 20 bis 100 mol/kmol, beziehungsweise in einem Wasserstoff/Comonomer-Verhältnis im Bereich von 50 bis 200 mol/kmol und vorzugsweise im Bereich von 70 bis 150 mol/kmol, zugegeben wird, und
- dem dritten Gasphasen-Reaktor weiterer Wasserstoff mit einem Wasserstoff/Comonomer-Verhältnis im Bereich von 10 bis 50 mol/kmol, vorzugsweise 15 bis 45 mol/kmol, zugegeben wird.

**14.** Verfahren nach einem der vorherigen Ansprüche 1 bis 13, bei dem das Comonomer/Propylen-Verhältnis im zweiten Gasphasen-Reaktor im Bereich von 200 bis 250 mol/kmol liegt und das Comonomer/Propylen-Verhältnis im dritten Gasphasen-Reaktor im Bereich von 500 bis 800 mol/kmol liegt.

**15.** Verfahren nach einem der vorherigen Ansprüche 1 bis 14, bei dem die Matrix einen $MFR_2$ gemäß ISO 1133 (230 °C, 2,16 kg) im Bereich von 200 bis 500 g/10 min aufweist.

## Revendications

**1.** Procédé pour produire des copolymères de propylène hétérophasique très fluides ; ledit procédé comprenant les étapes de

- polymérisation de propylène et éventuellement d'un comonomère d'éthylène et/ou d'$\alpha$-oléfine en $C_4$ à $C_{12}$ dans un réacteur en suspension en présence d'hydrogène et d'un système catalyseur de polymérisation, ce qui donne, en tant que produit du réacteur en suspension, une première fraction de polymère de propylène (PP1) de la matrice de polypropylène,
- transfert du produit du réacteur en suspension dans un premier réacteur en phase gazeuse,
- de nouveau polymérisation de propylène et éventuellement d'un comonomère d'éthylène et/ou d'$\alpha$-oléfine en $C_4$ à $C_{12}$ en présence dudit produit du réacteur en suspension, du système catalyseur de polymérisation et d'hydrogène supplémentaire, ce qui donne, en tant que produit du premier réacteur en phase gazeuse, un mélange de la première fraction de polymère de propylène (PP1) et d'une deuxième fraction de polymère de propylène (PP2), constituant la matrice de polypropylène du copolymère de propylène hétérophasique présentant un $MFR_2$, conformément à la norme ISO 1133 (230°C, 2,16 kg), égal ou supérieur à 200 g/10 min,
- transfert dudit produit du premier réacteur en phase gazeuse dans un deuxième réacteur en phase gazeuse,
- production d'une première fraction de copolymère de propylène élastomère (EPR1), en présence dudit produit du premier réacteur en phase gazeuse et au moins d'un éthylène et/ou d'une $\alpha$-oléfine en $C_4$ à $C_{12}$, le rapport comonomère/ propylène étant situé dans la plage allant de 150 à 300 mol/kmol,
- transfert du produit du deuxième réacteur en phase gazeuse dans un troisième réacteur en phase gazeuse,
- production d'une deuxième fraction de copolymère de propylène élastomère (EPR2) en présence dudit produit du deuxième réacteur en phase gazeuse et au moins d'un éthylène et/ou d'une $\alpha$-oléfine en $C_4$ à $C_{12}$, le rapport comonomère/ propylène étant situé dans la plage allant de 300 à 1000 mol/kmol, et
- récupération du copolymère de propylène hétérophasique pour un traitement ultérieur,

ledit système catalyseur de polymérisation comprenant

(i) un procatalyseur de Ziegler-Natta et
(ii) un cocatalyseur organométallique et
(iii) un donneur externe représenté par la formule (I)

$$Si\,(OCH_2CH_3)_3(NR^1R^2) \qquad (I)$$

dans laquelle $R^1$ et $R^2$ peuvent être identiques ou différents et représentent un groupe hydrocarboné possédant 1 à 12 atome(s) de carbone.

**2.** Procédé selon la revendication 1, dans lequel la matrice des copolymères de propylène hétérophasiques est un homopolymère de propylène.

**3.** Procédé selon la revendication 1, dans lequel le procatalyseur (i) utilisé est un procatalyseur de Ziegler-Natta, qui contient un produit de trans-estérification d'un alcool en $C_1$ à $C_4$ et d'un ester phtalate en tant que donneur interne et qui est éventuellement modifié par un composé vinylique de formule (II) $CH_2{=}CH{-}CHR^3R^4$ dans laquelle $R^3$ et $R^4$ forment ensemble un cycle à 5 ou 6 chaînons saturé, insaturé ou aromatique, ou bien représentent indépendamment un groupe alkyle comprenant 1 à 4 atome(s) de carbone.

**4.** Procédé selon la revendication 3, dans lequel le procatalyseur (i) utilisé a été préparé par

a) réaction d'un adduit solidifié en émulsion ou cristallisé par pulvérisation de $MgCl_2$ et d'un alcool en $C_1$ à $C_4$ avec du $TiCl_4$,
b) réaction du produit de l'étape a) avec un phtalate de dialkyle de formule (III)

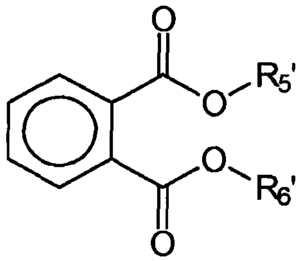

(III)

dans laquelle $R_5'$ et $R_6'$ sont indépendamment au moins un alkyle en $C_5$,
dans des conditions où il se produit une trans-estérification entre ledit alcool en $C_1$ à $C_4$ et ledit phtalate de dialkyle de formule (III) pour former le donneur interne,
c) lavage du produit de l'étape b) et
d) éventuellement réaction du produit de l'étape c) avec du $TiCl_4$.

**5.** Procédé selon la revendication 4, **caractérisé en ce que** le phtalate de dialkyle de formule (III) est le phtalate de di(éthylhexyle) et **en ce que** l'alcool en $C_1$ à $C_4$ est l'éthanol.

**6.** Procédé selon l'une quelconque des revendications 1 à 5, dans lequel le procatalyseur de Ziegler-Natta (i) est utilisé en présence d'un cocatalyseur organométallique (ii) choisi dans l'ensemble constitué par un trialkyl-aluminium, un chlorure de dialkyl-aluminium et un sesquichlorure d'alkyl-aluminium.

**7.** Procédé selon la revendication 6, **caractérisé en ce que** le cocatalyseur est le triéthyl-aluminium ou le chlorure de diéthyl-aluminium.

**8.** Procédé selon l'une quelconque des revendications 1 à 7, dans lequel le procatalyseur de Ziegler-Natta est utilisé en présence de diéthylaminotriéthoxysilane en tant que donneur externe.

**9.** Procédé selon la revendication 3, dans lequel le composé vinylique de formule (II) convenant pour modifier le procatalyseur est choisi parmi le vinylcyclohexène, le vinylcyclopentane, le vinyl-2-méthylcyclohexène et le vinylnorbornane, le 3-méthyl-1-butène, le styrène, le p-méthylstyrène, le 3-éthyl-1-hexène, et leurs mélanges.

**10.** Procédé selon l'une quelconque des revendications 1 à 9, lequel procédé comprend aussi une étape de prépolymérisation.

**11.** Procédé selon l'une quelconque des revendications 1 à 10, dans lequel le comonomère utilisé dans les deuxième et troisième réacteurs en phase gazeuse peut être identique ou différent et est choisi dans l'ensemble comprenant l'éthylène, le 1-butène, le 1-pentène, le 1-hexène, le 4-méthyl-1-pentène, le 1-heptène, le 1-octène, le 1-nonène et le 1-décène, ainsi que leurs mélanges.

**12.** Procédé selon la revendication 11, dans lequel de l'éthylène est utilisé en tant que seul comonomère.

**13.** Procédé selon l'une quelconque des revendications 1 à 12, dans lequel

- de l'hydrogène est ajouté dans le réacteur en phase en suspension avec un rapport hydrogène/propylène situé dans la plage allant de 15 à 35 mol/kmol, de préférence de 20 à 30 mol/kmol,
- encore de l'hydrogène est ajouté dans le premier réacteur en phase gazeuse avec un rapport hydrogène/propylène situé dans la plage allant de 50 à 300 mol/kmol, de préférence de 100 à 200 mol/kmol,
- encore de l'hydrogène est ajouté dans le deuxième réacteur en phase gazeuse avec un rapport hydrogène/propylène situé dans la plage allant de 5 à 300 mol/kmol, de préférence de 20 à 100 mol/kmol, respectivement avec un rapport hydrogène/comonomère situé dans la plage allant de 50 à 200 mol/kmol et de préférence dans la plage allant de 70 à 150 mol/kmol, et
- encore de l'hydrogène est ajouté dans le troisième réacteur en phase gazeuse avec un rapport hydrogène/comonomère situé dans la plage allant de 10 à 50 mol/kmol, de préférence de 15 à 45 mol/kmol.

**14.** Procédé selon l'une quelconque des revendications 1 à 13, dans lequel le rapport comonomère/propylène dans le deuxième réacteur en phase gazeuse est situé dans la plage allant de 200 à 250 mol/kmol et le rapport comonomère/propylène dans le troisième réacteur en phase gazeuse est situé dans la plage allant de 500 à 800 mol/kmol.

**15.** Procédé selon l'une quelconque des revendications 1 à 14, dans lequel la matrice a un $MFR_2$, conformément à la norme ISO 1133 (230°C, 2,16 kg) situé dans la plage allant de 200 à 500 g/10 min.

**Figure 1:**

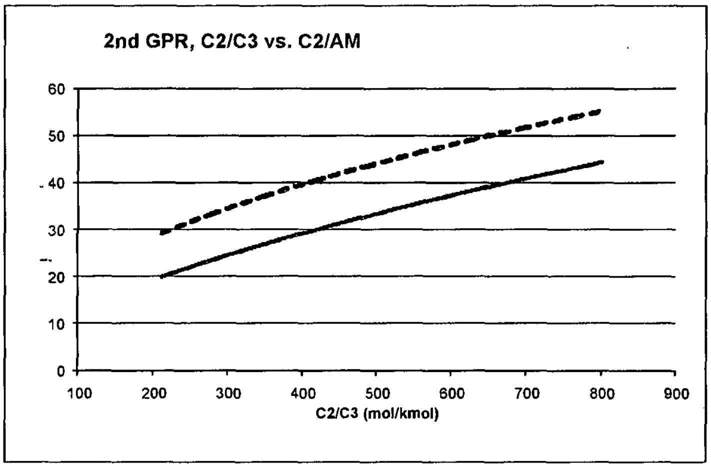


Remarkably higher C2 of AM is reached, if diethylaminotriethoxysilane (upper line -------) is used as external donor instead of dicyclopentyldimethoxysilane (lower line ———).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009129873 A
- WO 9219653 A
- WO 2010049448 A
- WO 2010040492 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 2004029112 A
- WO 9219659 A
- WO 9219658 A
- US 4347160 A
- US 4382019 A
- US 4435550 A
- US 4465782 A
- US 4473660 A
- US 4530912 A
- US 4560671 A
- EP 0491566 A
- WO 9924478 A
- WO 9924479 A
- WO 9924503 A
- WO 0068315 A
- EP 1538167 A
- EP 0887379 A
- WO 9212182 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- EP 1860125 A
- EP 887379 A
- EP 887380 A
- EP 887381 A
- EP 991684 A
- US 4933149 A
- EP 684871 A
- WO 2005087361 A
- US 4578879 A
- EP 600414 A
- EP 721798 A
- WO 2007025640 A
- US 4543399 A
- EP 699213 A
- WO 9425495 A
- EP 696293 A
- WO 0105845 A
- EP 499759 A
- WO 0026258 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 9704015 A
- WO 2006022736 A
- WO 2006120187 A
- EP 1633466 A
- EP 1484343 A
- GB 1580635 A
- WO 0066640 A
- EP 1028984 A
- EP 1183307 A


### Non-patent literature cited in the description


- **GELDART ; BAYENS.** *The Design of Distributors for Gas-fluidized Beds, Powder Technology,* 1985, vol. 42
- **GELDART.** Gas Fluidization Technology. J.Wiley & Sons, 1986